(19)

**Europäisches Patentamt**

**European Patent Office**

**Office européen des brevets**

(11) **EP 4 637 050 A1**

(12) **EUROPEAN PATENT APPLICATION**

(43) Date of publication:
22.10.2025 Bulletin 2025/43

(21) Application number: 24171456.7

(22) Date of filing: 19.04.2024

(51) International Patent Classification (IPC):
**H04B 10/071** (2013.01)

(52) Cooperative Patent Classification (CPC):
**H04B 10/071**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Adtran Networks SE**
**98617 Meiningen (DE)**

(72) Inventors:
• **Rapp, Lutz**
**98617 Meiningen (DE)**
• **Chanteau, Bruno**
**98617 Meiningen (DE)**

(74) Representative: **Eder Schieschke & Partner mbB**
**Patentanwälte**
**Elisabethstraße 34**
**80796 München (DE)**

(54) **MONITORING SYSTEM FOR MONITORING FIBER INTEGRITY IN OPTICAL TRANSMISSION SYSTEMS**

(57) The present invention relates to a method for monitoring fiber integrity in an optical transmission link. It relies on two monitoring signals coupled into an optical transmission fiber to verify its integrity. Of the two monitoring signals coupled into an optical transmission fiber by an active network element only one is reflected by a passive network element. The present invention furthermore relates to a device for monitoring fiber integrity in an optical transmission link, configured to implement the method, comprising an active network element at a first position within an optical transmission fiber. The present invention furthermore relates to a system for monitoring fiber integrity in an optical transmission link, configured to implement the method, comprising an active network element at a first position within an optical transmission fiber, configured to be able to couple at least a first optical signal at wavelength $\lambda_1$ and a second optical signal at wavelength $\lambda_2$ into the transmission fiber in a direction to a passive network element, a passive network element at a second position within the optical transmission fiber, configured to be able to reflect at least a predetermined power portion of the first optical signal through the optical transmission fiber back to the active network element and an evaluation unit, configured to determine the integrity of the transmission fiber.

Fig. 1

EP 4 637 050 A1

**Description**

The present invention relates to a method for monitoring fiber integrity in an optical transmission link. The present invention furthermore relates to a device for monitoring fiber integrity in an optical transmission link, configured to implement the method, comprising an active network element at a first position within an optical transmission fiber. The present invention furthermore relates to a system for monitoring fiber integrity in an optical transmission link, configured to implement the method, comprising an active network element at a first position within an optical transmission fiber, configured to be able to couple at least a first optical signal at wavelength $\lambda_1$ and a second optical signal at wavelength $\lambda_2$ into the transmission fiber in a direction to a passive network element at a second position within the optical transmission fiber, configured to be able to reflect at least a predetermined power portion of the first optical signal through the optical transmission fiber back to the active network element and an evaluation unit, configured to determine the integrity of the transmission fiber.

In optical data transfer, which is e.g. used in transferring data across long distances using e.g. glass fiber cables, the signal needs to be amplified at regular distances. Without the regular amplification, the signal would not arrive at the next element in the transmission network. The distances the data need to traverse can be quite large with several thousand kilometers in the case of transatlantic data transfer. The amplification of an optical signal can be effected by different kinds of amplification methods. Unlike the Erbium-Doped Fiber Amplification (EDFA), Raman amplification is achieved by a nonlinear interaction between the signal to be transferred and a pump laser within an optical fiber. The pump light may be coupled into the transmission fiber in the same direction as the signal, in the opposite direction or both. One advantage of Raman amplification is that the gain exists in every fiber. There is no need to use special fibers made for amplification purposes, such as e.g. erbium-doped fibers. However, the pump power required for Raman amplification is higher than that required by the EDFA.

Since Raman amplification implies to launch pump powers into the fiber that are typically above laser safety limits, a mechanism to check the continuity of the fiber link prior to full use of the one or more pump lasers and during operation needs to be implemented. Operating the one or more pump lasers of a Raman amplifier at high pump powers without checking the integrity of the optical fiber could cause damage to human beings and to the transmission network. In case of a fiber cut occurring during system operation, it is therefore mandatory to quickly detect the fiber cut and to turn off the pump lasers.

Laser safety mechanisms typically used to confirm integrity of the optical fiber require active network elements at both ends of a fiber. This, however, needs more energy and is not available in many transmission links and is therefore not suitable for this application. In many transmission links, an active network element is followed by a passive network element since the infrastructure does not allow for energy supply at both network elements. Additional equipment would therefore be required in the transmission link, such as active laser safety devices, which is expensive and difficult to implement later in e.g. a transatlantic optical transmission link.

A solution providing laser safety without involving both ends of a transmission link is disclosed in the patent EP 1 229 382 B1. In short, the described apparatus detects amplified spontaneous emission (ASE) generated by an excitation light and decides on fiber integrity based on the measurement result. However, this solution is not very reliable if patch panel losses from the output port of the Raman pump card and the transmission fiber are not known exactly. Consequently, the amplifier will not turn on in many cases although the fiber link is intact. Furthermore, the solution does not work well with short fiber links.

European patent EP 2 161 859 B1 describes a solution for three subsequent network elements connected in series, all of them equipped with a power monitor and therefore not passive. It faces the same problems as described before.

Starting from this known prior art, it is an object of the present invention to provide an efficient method for checking fiber integrity in an optical transmission link. It is a further object of the invention to provide a device for implementing such a method in an optical transmission link.

The invention achieves these objects with the combination of features of the independent claims. Further embodiments of the invention are apparent from the dependent claims.

According to the invention, the method for monitoring fiber integrity in an optical transmission link comprises several steps. The transmission link comprises at least an active network element and a passive network element which are connected via an optical transmission fiber. This layout, with a passive network element following an active network element along an optical transmission fiber, may repeat itself within the optical transmission link.

The active network element is configured in such a way that it is able to output a first optical signal at a wavelength $\lambda_1$ or within a first wavelength range $\Delta\lambda_1$ and a second optical signal at a wavelength $\lambda_2$ or within a first wavelength range $\Delta\lambda_2$ into the transmission fiber in a direction towards the passive network element. Each of the first and second optical signals is either generated within the active network element or supplied to the active network element. Typically, the signals are generated within the active network element. For this method signals which have been supplied to the active network element like a WDM-signal, which is a multiplexed optical signal with a wavelength range in the C-band and the L-band, but is not limited to these bands, can also be used. In this case e.g. the transmission signal traversing the optical transmission link can be used. Two optical channels at wavelengths $\lambda_1$ and $\lambda_2$ or corresponding wavelength ranges $\Delta\lambda_1$ and $\Delta\lambda_2$ of a WDM-signal can be used as the first and second optical signal. The method is applicable to any other optical signal as well. The active network element is further configured to be able to measure relative or absolute values of the optical power of optical signals which are emitted by the active network element or arrive at the active network element, e.g. through the optical transmission fiber.

One step of the method for monitoring fiber integrity in an optical transmission link is the outputting by the active network element of a first optical signal at a wavelength $\lambda_1$ and a second optical signal at a wavelength $\lambda_2$ into the transmission fiber in a direction towards the passive network element. It is understood that optical signals at a specific wavelength have spectral components in a narrow frequency range around their center wavelength. For reasons of simplicity, the signals are still referred to as a signal at a specific wavelength. In case of a multiplexed signal or similar, the wavelength range $\Delta\lambda_1$ and $\Delta\lambda_2$ is accordingly large.

Another step is the measuring, by the active network element, of relative or absolute values of the optical power $P_{in|\lambda 1}$ and $P_{in|\lambda 2}$ of the first and second optical signal. One more step is reflecting, at the passive network element, a predetermined power portion of the first signal to form a reflected first optical signal. The reflected first optical signal is then traversing back, through the optical transmission fiber, to the active network element.

Another step is measuring, by the active network element, relative or absolute values $P_{RX|\lambda 1}$ and $P_{RX|\lambda 2}$ of the optical power of a first optical receive signal $S_{RX|1}$ and a second optical receive signal $S_{RX|2}$ that are received at the active network element. Measuring power values comprises determining power values with measurement devices designed to determine optical power as well as deriving the optical power values from other physical parameters influencing laser diode output power, such as injection current.

The optical power $P_{RX|\lambda 1}$ comprises, in addition to power portions of the reflected first optical signal received, power portions caused by backscattering within the optical transmission fiber. Such a backscattering effect is e.g. Rayleigh scattering. The optical power $P_{RX|\lambda 2}$ comprises power portions caused by backscattering within the optical transmission fiber. This power portion is comparable to the power portion in $P_{RX|\lambda 1}$ caused by backscattering. The two portions are typically not identical since the scattering effects occurring in the optical transmission fiber are wavelength-dependent.

It is possible that portions of the second optical signal are reflected by the passive network element through unwanted reflections, which can be caused by e.g. the connection between the transmission fiber and the third optical signal port of the passive network element. It is further possible that the optical power $P_{RX|\lambda 2}$ comprises power portions caused by reflection in the optical transmission fiber, which could be caused by inaccuracies at connecting spots of two parts of the transmission fiber or couplers. When two glass fibers are connected to continue a transmission link, the surfaces of the glass fibers are joined. It is possible that the surfaces of the glass fibers are not joined perfectly and therefore small reflections of optical signals traversing the transmission link can occur at these spots. However, the power portion of the second optical receive signal $S_{RX|2}$ caused by the aforementioned reflection effects is in most cases neglectable and not comparable to the optical power portion of $P_{RX|\lambda 1}$ purposefully reflected by the passive network element. Essentially, the optical power $P_{RX|\lambda 2}$ comprises power portions caused by backscattering within the optical transmission fiber.

One more step is determining an evaluation parameter $R_{eval}$ that is essentially determined by the transmission characteristics of the optical transmission fiber by using measured values of the optical power $P_{RX|\lambda 1}$ and $P_{RX|\lambda 2}$ and the optical power $P_{in|\lambda 1}$ and $P_{in|\lambda 2}$ of the first and second optical signal. The final step can be comparing the evaluation parameter $R_{eval}$ with a predetermined evaluation threshold value in order to determine the integrity of the transmission fiber. These two steps can be implemented by an evaluation unit. The evaluation unit can be integrated in the active network element or it can be realized as an external device that receives the signal values $P_{RX|\lambda 1}$, $P_{RX|\lambda 2}$ and $P_{in|\lambda 1}$, $P_{in|\lambda 2}$.

The method is not limited to these steps. One more step could for example be outputting the result of the evaluation to an external device. The method according to the invention can be combined with a method for detecting amplified spontaneous emission (ASE), which is suited for very large fiber lengths in the range of 50km to 120km. In a combination of the two methods, an intact transmission link is assumed if one of the techniques yields a positive result.

The method according to the invention works without the need for two active network elements. Active network elements in general are more expensive to manufacture, buy and to run continuously. No necessity for more active network elements makes it possible to run the optical transmission link more efficiently. It is also not necessary to very expensively equip the optical transmission link with further active network elements, after it started operating. Another advantage of the method according to the invention is its reliability. Due to its relative simplicity, there are fewer possible causes for malfunctioning. Passive network elements in general are less likely to malfunction and cheaper to replace.

In case the first and second optical signals are supplied to the active network element or two wavelengths of a transmission signal are used as the first and second optical signal, the active network element can output the first and second optical signal without comprising any device, which is able to generate an optical signal. Even very simple transmission links without amplifiers can be monitored this way.

According to an embodiment of the invention, the evaluation parameter $R_{eval}$ is determined by forming a ratio of a generalized reflectivity $R_{power|\lambda1}$ and $R_{power|\lambda2}$ at the first and second wavelength $\lambda_1$, $\lambda_2$, respectively. The generalized reflectivity at the respective wavelength $\lambda_1$, $\lambda_2$ is defined as the ratio of the respective optical power $P_{RX|\lambda1}$, $P_{RX|\lambda2}$ of the first and second optical receive signal $S_{RX|1}$, $S_{RX|2}$ and the respective optical power $P_{in|\lambda1}$, $P_{in|\lambda2}$ of the first and second optical signal.

According to an embodiment of the invention, the evaluation parameter $R_{eval}$ is determined by the calculation rule

$$R_{eval} = \frac{R_{power|\lambda1}}{R_{power|\lambda2}} \tag{1}$$

wherein the generalized reflectivities $R_{power|\lambda1}$ and $R_{power|\lambda2}$ are determined by the calculation rules

$$R_{power|\lambda1} = \frac{P_{RX|\lambda1}}{P_{in|\lambda1}} \quad \text{and} \quad R_{power|\lambda2} = \frac{P_{RX|\lambda2}}{P_{in|\lambda2}} \tag{2}$$

According to an embodiment of the invention, the integrity of the transmission fiber is confirmed if the evaluation parameter $R_{eval}$ is significantly larger than 1, preferably larger than 1.5, more preferably larger than 2, most preferably larger than 5. Obviously, this is only the case if the ratio of the generalized reflectivity $R_{power|\lambda\#}$ ($\lambda\#$ standing for either $\lambda_1$ or $\lambda_2$) of the signal, which is deliberately reflected by the passive network element, is in the numerator of the fraction in equation (1). If the ratio of the generalized reflectivity $R_{power|\lambda\#}$ of the signal, which is deliberately reflected by the passive network element, is in the denominator of the fraction in equation (1), the integrity of the transmission fiber is confirmed if the evaluation parameter $R_{eval}$ is significantly smaller than 1 but still positive, preferably smaller than 0.5, more preferably smaller than 0.2, most preferably smaller than 0.1.

According to an embodiment of the invention, the first and second optical signals are either monitoring signals, pump signals, which are adapted to effect Raman amplification within the optical transmission fiber, data signals, which can be part of a transmission signal traversing the optical transmission link, or any combination thereof. E.g. the first optical signal can be a monitoring signal, created within the active network element and the second signal can be a pump signal. Any combination for the first and second optical signal is possible. In case of a monitoring signal and a pump signal, the monitoring signal is usually the signal which is deliberately reflected by the passive network element. However, the method also works if the pump signal is deliberately reflected by the passive network element. In case of two pump signals, a strong reflection from one of the two pump signals back to the active network element could disturb the functionality of the pump lasers if they are not protected by an isolator. An optical signal source generating a pump signal can be equipped with an isolator, which prevents reflection from a pump signal from disturbing the functionality of the optical signal source. In general, the shorter the transmission distance, the stronger the reflection, so the problem could more likely occur with short transmission fibers. The optical signal sources can be configured as continuous wave lasers.

According to an embodiment of the invention, the wavelengths $\lambda_1$, $\lambda_2$ of the first and second optical signal are chosen such that they encounter a wavelength-dependent attenuation caused by the optical transmission fiber that does not differ by more than a predetermined threshold value, wherein the predetermined threshold value is preferably less than 0.5 dB, more preferably less than 0.2 dB and most preferably less than 0.1 dB for the twofold length of the optical transmission fiber. This ensures that $R_{eval}$ is essentially 1 if no signal is reflected by the passive network element. Optical transmission fibers and glass fibers in particular cause a wavelength-dependent attenuation. In case the wavelengths $\lambda_1$ and $\lambda_2$ of the first and second optical signal are chosen too far apart, the attenuation they experience individually could differ too much for the results to be usable. In such a case, $R_{eval}$ would not be essentially 1 if no signal is reflected by the passive network element.

However, the wavelength dependence of the fiber attenuation can be included in the respective calculations such that the method can also be used for larger frequency spacings if the wavelength dependence of the attenuation coefficient is known.

According to an embodiment of the invention, the first optical signal is a monitoring signal and the second optical signal is a pump signal adapted to effect Raman amplification within the optical transmission fiber. The wavelength $\lambda_1$, of the monitoring signal is chosen in such a way that the monitoring signal does not experience Raman amplification greater than a predetermined threshold value, wherein the threshold value is preferably 0.5 dB, more preferably 0.2 dB and most preferably 0.05 dB. These thresholds are dependent on the length of the fiber to be monitored and have to be adjusted accordingly. Raman amplification is most effectively achieved with a difference of approximately 13.2 THz or 7.2 nm between the pump wavelength and the optical transmission signal to be amplified. The difference between the wavelengths of the monitoring signal and the pump signal is preferably smaller than 4 nm, more preferably smaller than 3 nm and most preferably smaller than 2 nm. This ensures that the monitoring signal is not amplified along with the optical signal to be transferred by the optical transmission link, which in turn ensures that the monitoring signal does not interfere with the signal to be amplified.

According to an embodiment of the invention, the optical power of the first and second optical signal is periodically amplitude-modulated, preferably by a sinusoidal signal having a predetermined modulation frequency, wherein the modulation frequency is chosen in such a way that the evaluation parameter $R_{eval}$ is at a maximum in case of existing fiber integrity. The modulation can also be done using a different function, e.g. a cosine.

According to the invention, the active network element for monitoring fiber integrity in an optical transmission comprises a first optical signal port which is connectable to a first end of the optical transmission fiber. The first optical signal port is connected to an internal optical path. The active network element further comprises a first optical transceiver which is configured to, in case the first optical signal at wavelength $\lambda_1$ is not supplied to the active network element, create and couple the first optical signal at the wavelength $\lambda_1$ into the optical path by means of an optical coupling device and to receive, via the optical coupling device, the first optical receive signal $S_{RX|1}$ that is received at the first optical signal port if the first optical signal port is connected, via the optical transmission fiber, to the passive network element. The first optical transceiver is further configured to, in case the first optical signal at wavelength $\lambda_1$ is supplied to the active network element, receive via the optical coupling device, the first optical signal at wavelength $\lambda_1$. The first optical transceiver is further configured to measure relative or absolute values of the optical power $P_{in|\lambda 1}$ of the first optical signal and relative or absolute values $P_{RX|\lambda 1}$ of the optical power of a first optical receive signal $S_{RX|1}$.

The active network element further comprises a second optical transceiver which is configured to, in case the second optical signal at wavelength $\lambda_2$ is not supplied to the active network element, create and couple the second optical signal at the wavelength $\lambda_2$ into the optical path by means of the optical coupling device and to receive, via the optical coupling device, the second optical receive signal $S_{RX|2}$ that is received at the first optical signal port if the first optical signal port is connected, via the optical transmission fiber, to the passive network element. The second optical transceiver is further configured to, in case the second optical signal at wavelength $\lambda_2$ is supplied to the active network element, receive via the optical coupling device, the second optical signal at wavelength $\lambda_2$. The second optical transceiver is further configured to measure relative or absolute values of the optical power $P_{in|\lambda 2}$ of the second optical signal and relative or absolute values $P_{RX|\lambda 2}$ of the optical power of a second optical receive signal $S_{RX|2}$. All values are measured at optical measurement devices comprised in the first and second transceiver. However, the paths and their properties of the optical signals from the first optical signal port to the measurement devices are known. The measured values and the known properties of the optical paths within the active network element are used to figure out the power values of all optical signals at the first optical signal port.

It shall be mentioned, that, although the term "transceiver" usually implies that such a component or device is capable of both transmitting and receiving signals, it might be realized as a receiver only in case no first or second signal need to be created as the respective signal is fed to the active network component.

According to an embodiment of the invention, the active network element further comprises an evaluation unit which is configured to determine the evaluation parameter $R_{eval}$ using the values measured by the first and second optical transceiver using the method according to the invention. The evaluation unit can be configured as any means capable of executing computing steps, receiving and sending signals and evaluating data, e.g. a computer or any other electronic device comprising appropriate hardware and software.

According to an embodiment of the invention, the active network element further comprises a transmission unit, configured to transmit information on the values measured by the first and second optical transceiver to an evaluation unit which is configured to determine the evaluation parameter $R_{eval}$. This makes an evaluation possible even in cases in which the evaluation unit is an external evaluation unit and not comprised directly within the active network element. The measurement data is then transferred using either the optical transmission link or any other transmission means from the transmission unit to the evaluation unit. The active network element can comprise an evaluation unit and a transmission unit simultaneously.

According to an embodiment of the invention, the active network element further comprises a second optical signal port which is connectable to a further optical transmission fiber. The optical coupling device is further configured to pass through an optical transmission signal received at the second optical signal port to the first optical signal port and vice versa, wherein the optical transmission signal lies within an optical spectrum that does not comprise the wavelengths $\lambda_1$ and $\lambda_2$ of the first and second optical signal. The term "pass through" can be understood in such a way that the coupling device lets the optical transmission signal pass through.

According to an embodiment of the invention, at least one of the first and second transceivers is configured to create the respective first or second optical signal as a pump signal in order to create Raman amplification within the optical transmission fiber. A pump signal in this instant is configured to amplify the optical transmission signal, which entered the active network element through the second optical signal port. In other words, it amplifies the optical transmission signal traversing the optical transmission link. A pump signal essentially has the same properties as an optical monitoring signal. The main difference between an applied monitoring signal and a pump signal is the higher power of the pump signal, which is necessary for the amplification in the optical transmission fiber.

According to the invention, a system for monitoring fiber integrity in an optical transmission link is configured to implement the method according to the invention. The system comprises an active network element at a first position within an optical transmission fiber. The system further comprises a passive network element at a second position within the optical transmission fiber. The passive network element is configured to be connectable to a second end of the optical transmission fiber and a reflection device configured to reflect at least a predetermined power portion of the first optical signal and to feed the reflected power portion to the optical signal port in direction to the active network element, wherein the reflection device may be integrated in the passive network element. The system further comprises an evaluation unit, configured to determine the evaluation parameter $R_{eval}$ using the measured values and to use the evaluation parameter $R_{eval}$ to determine the integrity of the transmission fiber. The evaluation parameter $R_{eval}$ is essentially determined by the transmission characteristics of the optical transmission fiber by using measured values of the optical power $P_{RX|\lambda 1}$ and $P_{RX|\lambda 2}$ and the optical power $P_{in|\lambda 1}$ and $P_{in|\lambda 2}$ of the first and second optical signal. The evaluation unit is further configured to compare the evaluation parameter $R_{eval}$ with a predetermined evaluation threshold value in order to determine the integrity of the transmission fiber.

According to an embodiment of the invention, the system is characterized in that the passive network element comprises another optical signal port which is connectable to a further optical transmission fiber. The passive network element is configured to pass through, via an optical path, the optical transmission signal received at a third optical signal port to a fourth optical signal port and vice versa. The passive network element is further configured to, in case neither the first optical signal at wavelength $\lambda_1$ nor the second optical signal at wavelength $\lambda_2$ is supplied to the active network element, dissipate all optical power of the first and second optical signals apart from the reflected optical power portion of the first optical signal. In case the first optical signal at wavelength $\lambda_1$ and/or the second optical signal at wavelength $\lambda_2$ is supplied to the active network element, the passive network element is configured to pass through, via an optical path, the optical transmission signal received at a third optical signal port to a fourth optical signal port and vice versa without dissipating any optical power of the first and second optical signals.

In an optical transmission link, more systems comprising an active and passive network element at two ends of an optical transmission fiber can follow in series. In such cases, it is important that the monitoring signals of one system do not interfere with the monitoring signals of another system to ensure reliability of the monitoring method implemented by each system. The passive network element dissipating all optical power of the first and second optical signals apart from the reflected optical power portion of the first optical signal ensures that the following and previous systems' monitoring signals are not disturbed.

Embodiments of the invention will now be described with reference to the drawings. In the drawings,

Fig. 1    shows a schematic structure of a device for monitoring fiber integrity in an optical transmission link according to the invention;

Fig. 2    shows a schematic structure of a device for monitoring fiber integrity in an optical transmission link with an external evaluation unit according to the invention;

Fig. 3    shows a diagram illustrating power transfer from the pump to the signal due to stimulated Raman scattering and showing the Raman gain curve of Raman amplification with the wavelengths of the Raman pump laser and the signal to be amplified;

Fig. 4    shows a diagram including simulated curves of a parametric representation of the dependence of the evaluation parameter on transmission fiber length for different values of reflection factor R;

Fig. 5    shows a schematic structure of an embodiment of the device for monitoring fiber integrity in an optical transmission link according to the invention;

Fig. 6    shows a diagram including simulated curves of a parametric representation of the dependence of the evaluation parameter on transmission fiber length for different values of reflection factor *R with and without amplitude modulation;*

Fig. 7    shows a schematic structure of an embodiment of the device for monitoring fiber integrity in an optical transmission link according to the invention wherein the first and the second optical signal are supplied to the active network element; and

Fig. 8    shows a diagram illustrating the dependency of the optical output power of a laser diode on the injection current (so-called the LI curve).

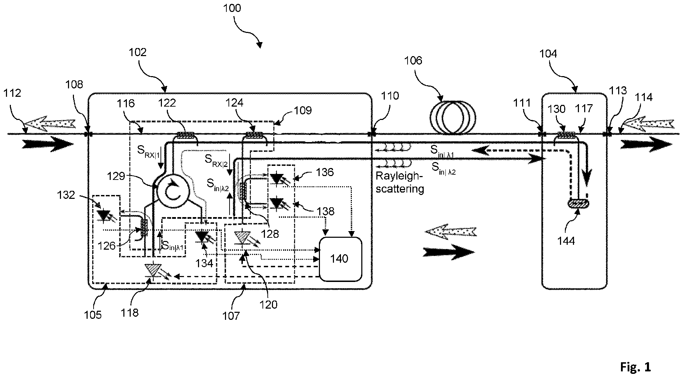

In the following, embodiments according to the invention will be explained. Fig. 1 shows a schematic structure of a system 100 for monitoring fiber integrity in an optical transmission link. The system comprises an active network element 102 and a passive network element 104. Between the active and passive network element, a first end of an optical transmission fiber 106 is coupled into the first optical signal port 110 at the active network element 102, and a second end of the optical transmission fiber 106 is coupled into the third optical signal port 111 at the passive network element 104. An optical transmission fiber 112 and 114 is coupled into the second optical signal port 108 and the fourth optical signal port 113, respectively, to continue the data transfer along the optical transmission link.

In the active network element 102, the second optical signal port 108 and the first optical signal port 110 are connected by an optical path 116. The optical path 116 is configured to ensure a transfer of optical signals from the second optical signal port 108 to the first optical signal port 110 and vice versa. The active network element 102 comprises an optical coupling device 109 (dotted lines), which comprises a first, second, third, fourth and fifth coupling device 122, 124, 126, 128 and 129. The active network element 102 further comprises a first optical transceiver 105 (dotted lines), which comprises a first optical signal source 118, a first measurement device 132 and a second measurement device 134. The active network element 102 further comprises a second optical transceiver 107 (dotted lines), which comprises a second optical signal source 120, a third measurement device 136 and a fourth measurement device 138.

Along the optical path 116, the first coupling device 122 and the second coupling device 124 are connected to the optical path 116. The first coupling device 122 and the second coupling device 124 are configured to couple optical signals into the optical path 116 and to decouple optical signals out of the optical path 116.

The first coupling device 122 is connected to the fifth coupling device 129 via another optical path. In this embodiment, the fifth coupling device 129 is configured as an optical circulator, but it can be configured as any means capable of coupling and decoupling optical signals from one optical path into another. The fifth coupling device 129 is connected to the third coupling device 126 and the second measurement device 134 via optical paths. The third coupling device 126 is connected to the first measurement device 132 and the first optical signal source 118 via optical paths. All measurement devices in the active network element 102 can be configured as photo diodes or any other means capable of measuring optical signals. The first optical signal source 118 can be configured as a laser or any other means capable of emitting an optical signal.

It is possible to realize an embodiment without the fifth coupling device 129. In this case, the first coupling device 122 is connected to the third coupling device 126 directly. The third coupling device 126 is then connected to the first optical signal source 118, the first measurement device 132 and the second measurement device 134.

The second coupling device 124 is connected to the fourth coupling device 128 via an optical path. The fourth coupling device 128 is connected to the third measurement device 136, the fourth measurement device 138 and the second optical signal source 120 via optical paths. The second optical signal source 120 can be configured as a laser or any other means capable of emitting an optical signal. All measurement devices in the active network element 102, namely, the first, second, third and fourth measurement device 132, 134, 136 and 138, are connected to an evaluation unit 140. The evaluation unit 140 can be configured as any means capable of executing computing steps, receiving and sending signals and evaluating data, e.g. a computer or any other electronic device comprising appropriate hardware and software.

In the passive network element 104, the third optical signal port 111 and the fourth optical signal port 113 are connected by an optical path 117. The optical path 117 is configured to ensure a transfer of optical signals from the third optical signal port 111 to the fourth optical signal port 113 and vice versa. Along the optical path 117, a sixth coupling device 130 is connected to the optical path 117. The sixth coupling device 130 is configured to couple optical signals into the optical path 117 and to decouple optical signals out of the optical path 117. The sixth coupling device 130 is connected to a reflection device 144 via an optical path. The reflection device 144 can be configured as a mirror or a wavelength-dependent mirror or any other means capable of reflecting optical signals.

In the embodiment of the invention shown in Fig. 1, an optical signal is traversing along the optical transmission fiber 112. It enters the active network element 102 through the second optical signal port 108 and traverses to the first optical signal port 110 along the optical path 116.

The first optical signal source 118 emits a first optical signal $S_{in|\lambda 1}$ at wavelength $\lambda_1$ which traverses from the first optical signal source 118 to the third coupling device 126. At the third coupling device 126, a small power portion of the first optical signal $S_{in|\lambda 1}$ at wavelength $\lambda_1$ is decoupled and transmitted to the first measurement device 132 via an optical path. Typically, the decoupled power portion is about 2% to 5% of the total signal power. The first measurement device 132 measures the optical power $P_{in|\lambda 1}$ of the first optical signal $S_{in|\lambda 1}$ at wavelength $\lambda_1$. It then transmits the measurement data to the evaluation unit 140. The main portion of the first optical signal $S_{in|\lambda 1}$ at wavelength $\lambda_1$, which has not been decoupled by the third coupling device 126, traverses from the third coupling device 126 to the fifth coupling device 129. From the fifth coupling device 129, the signal traverses to the first coupling device 122 and is coupled into the optical path 116.

The second optical signal source 120 emits a second optical signal $S_{in|\lambda 2}$ at wavelength $\lambda_2$ which traverses from the second optical signal source 120 to the fourth coupling device 128. At the fourth coupling device 128, a small power portion of the second optical signal $S_{in|\lambda 2}$ at wavelength $\lambda_2$ is decoupled and transmitted to the third measurement device 136 via an optical path. The third measurement device 136 measures the optical power $P_{in|\lambda 2}$ of the second optical signal $S_{in|\lambda 2}$ at wavelength $\lambda_2$. It then transmits the measurement data to the evaluation unit 140. The main portion of the second optical signal $S_{in|\lambda 2}$ at wavelength $\lambda_2$, which has not been decoupled by the fourth coupling device 128, traverses from the fourth coupling device 128 to the second coupling device 124 and is coupled into the optical path 116.

The optical signal, which entered the active network element 102 through the second optical signal port 108, is multiplexed with the first optical signal $S_{in|\lambda 1}$ at wavelength $\lambda_1$ and second optical signal $S_{in|\lambda 2}$ at wavelength $\lambda_2$ by the first and second coupling device 122 and 124, respectively. Typically, the second optical signal $S_{in|\lambda 2}$ at a wavelength $\lambda_2$ is a pump signal used to amplify the optical signal, which entered the active network element 102 through the second optical signal port 108. In such a case, the second optical signal source 120 is configured as a pump laser.

The multiplexed signal is then coupled into the optical transmission fiber 106 in the direction towards the passive network element 104 by the first optical signal port 110. The multiplexed signal traverses along the optical transmission fiber 106 to the passive network element 104 and is coupled into the optical path 117 by the third optical signal port 111. During the transmission from the active network element 102 to the passive network element 104, the multiplexed signal experiences Rayleigh scattering and other types of scattering which direct a portion of the multiplexed signal back to the active network element 102.

The sixth coupling device 130 decouples a power portion of the first optical signal $S_{in|\lambda 1}$ at a wavelength $\lambda_1$ from the optical path 117 to the reflection device 144. The reflection device 144 can be configured as a wavelength-dependent mirror or a mirror which reflects any wavelength. The reflection device 144 reflects the power portion of the first optical signal $S_{in|\lambda 1}$ at a wavelength $\lambda_1$ back to the sixth coupling device 130, which couples it into the optical path 117 in the direction back towards the active network element 102.

The first optical receive signal $S_{RX|1}$ at wavelength $\lambda_1$ and the second optical receive signal $S_{RX|2}$ at wavelength $\lambda_2$ traversing in a direction from the passive network element 104 towards the active network element 102 are coupled into the optical path 116 by the first optical signal port 110. The first optical receive signal $S_{RX|1}$ at wavelength $\lambda_1$ comprises, in addition to the power portions of the reflected first optical signal, power portions caused by backscattering, such as Rayleigh scattering, within the optical transmission fiber, whereas the second optical receive signal $S_{RX|2}$ at wavelength $\lambda_2$ comprises power portions caused by backscattering, such as Rayleigh scattering, within the optical transmission fiber, only. The reflection device 144 only reflects the first optical signal at wavelength $\lambda_1$.

The second optical receive signal $S_{RX|2}$ at wavelength $\lambda_2$ is decoupled by the second coupling device 124 from the optical path 116 and transmitted to the fourth coupling device 128. The second optical receive signal $S_{RX|2}$ at wavelength $\lambda_2$ is then decoupled by the fourth coupling device 128 from the optical path and transmitted to the fourth measurement device 138 via an optical path. The fourth measurement device 138 measures the optical power $P_{RX|\lambda 2}$ of the second optical receive signal $S_{RX|2}$. It then transmits the measurement data to the evaluation unit 140.

The first optical receive signal $S_{RX|1}$ at wavelength $\lambda_1$ is decoupled by the first coupling device 122 from the optical path 116 and transmitted to the fifth coupling device 129. The first optical receive signal $S_{RX|1}$ at wavelength $\lambda_1$ is then decoupled by the fifth coupling device 129 from the optical path and transmitted to the second measurement device 134 via an optical path. The second measurement device 134 measures the optical power $P_{RX|\lambda 1}$ of the first optical receive signal $S_{RX|1}$. It then transmits the measurement data to the evaluation unit 140.

The evaluation unit 140 determines an evaluation parameter $R_{eval}$ that is essentially determined by the transmission characteristics of the optical transmission fiber by using the measured values of the optical power $P_{RX|\lambda 1}$ and $P_{RX|\lambda 2}$ and the optical power $P_{in|\lambda 1}$ and $P_{in|\lambda 2}$ of the first and second optical signal. The evaluation parameter $R_{eval}$ is then compared with a predetermined evaluation threshold value in order to determine the integrity of the transmission fiber.

The result is then transmitted to the optical signal sources 118 and 120, in case that they are configured as pump lasers. By this, it is signaled that it is safe to launch pump powers into the fiber that are typically above laser safety limits.

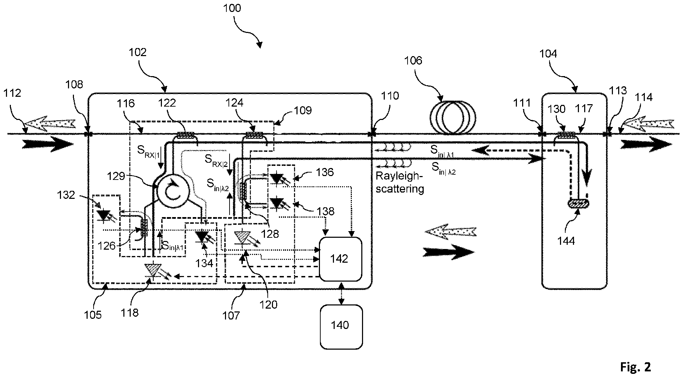

Fig. 2 shows a schematic structure of a system 100 for monitoring fiber integrity in an optical transmission link. The difference to the embodiment shown in Fig. 1 is that the evaluation unit 140 is not comprised in the active network element 102. Instead, it comprises a transmission unit 142, which is configured to receive the measurement values from the first and second transceiver 105 and 107, i.e. the measurement data of the first, second, third and fourth measurement device 132, 134, 136 and 138 and to transmit the data to an external evaluation unit 140. It can use the transmission link to transmit the data to the evaluation unit 140 (not depicted) or any other method of transmitting data. It is further configured to receive data from the external evaluation unit 140 and to transmit data to the first and second optical signal source 118 and 120. The other elements of the system function analogously to the embodiment described in Fig. 1.

The evaluation process is described in further detail in the following. Note that the known properties of the paths of the optical signals from the first optical signal port 110 to the measurement devices and the measured values are used to determine the respective power values at the first optical signal port 110. In the following, all measured values are actually the power values at the first optical signal port 110, determined by the respective measured values and known properties of the respective paths from the first optical signal port 110 to the respective measurement devices. Wavelength-dependent power, reflected back to the first optical signal port 110 by Rayleigh backscattering, can be described by the equation

$$P_{Rayleigh|\lambda\#} = P_{in|\lambda\#} \cdot \frac{\gamma_{Rayleigh}}{2\alpha_{Np}} \cdot \left[1 - e^{-2\alpha_{Np}L}\right], \qquad (3)$$

where $P_{in|\lambda\#}$ stands for the input power of the monitoring signal at wavelength $\lambda_{\#}$ launched into the optical transmission fiber 106 in a direction towards the passive network element 104, $L$ is the length of the optical transmission fiber 106, and the Rayleigh backscattering coefficient is represented by $\gamma_{Rayleigh}$. The attenuation coefficient $\alpha_{Np}$ used in this equation is linked to the attenuation coefficient in *dB per distance* according to the equation

$$\alpha_{Np} = \frac{\ln(10)}{10} \cdot \alpha_{dB}. \qquad (4)$$

For the following explanations, it is assumed that the wavelength dependence of this coefficient can be neglected. However, specific wavelength dependent values of the coefficient could be used for calculating the reflected power for the two lightwaves.

The power reflected at the reflection device 144 in the passive network element 104 with reflection factor R superimposes to above-indicated power level for $\lambda_1$ (because the first optical signal $S_{in|\lambda 1}$ at wavelength $\lambda_1$ is reflected) with the power

$$P_{reflector|\lambda 1} = P_{in|\lambda 1} \cdot R \cdot e^{-2\alpha_{Np}L}. \qquad (5)$$

The reflection ratio $R_{power|\lambda 1}$ of the total reflected power of the first optical receive signal $S_{RX|1}$ at wavelength $\lambda_1$, measured by the second measurement device 134, to the power of the first optical signal $S_{in|\lambda 1}$ at wavelength $\lambda_1$ measured by the first measurement device 132, which was initially launched by the first optical signal source 118, is given by

$$R_{power|\lambda 1} = \frac{P_{RX|\lambda 1}}{P_{in|\lambda 1}} = \frac{P_{Rayleigh|\lambda 1} + P_{reflector|\lambda 1}}{P_{in|\lambda 1}} = \frac{\gamma_{Rayleigh}}{2\alpha_{Np}} \cdot \left[1 - e^{-2\alpha_{Np}L}\right] + R \cdot e^{-2\alpha_{Np}L} \quad (6)$$

wherein $P_{RX|\lambda 1}$ is the sum of the power $P_{Rayleigh|\lambda 1}$, which is the power of the signal reflected back to the first optical signal port 110 by Rayleigh backscattering, and the power $P_{reflector|\lambda 1}$, which is the power of the signal reflected at the reflection device 144 in the passive network element 104. The reflection ratio $R_{power|\lambda 2}$ of the total reflected power of the second optical receive signal $S_{RX|2}$ at wavelength $\lambda_2$, measured by the fourth measurement device 138, to the power of the second optical signal $S_{in|\lambda 2}$ at wavelength $\lambda_2$, measured by the third measurement device 136, which was initially launched by the second optical signal source 120, is given by

$$R_{power|\lambda 2} = \frac{P_{RX|\lambda 2}}{P_{in|\lambda 2}} = \frac{P_{Rayleigh|\lambda 2}}{P_{in|\lambda 2}} = \frac{\gamma_{Rayleigh}}{2\alpha_{Np}} \cdot \left[1 - e^{-2\alpha_{Np}L}\right]. \qquad (7)$$

The ratio of the two reflection ratios $R_{power|\lambda 1}$ and $R_{power|\lambda 2}$ is then calculated and results in the evaluation parameter $R_{eval}$:

$$R_{eval} = \frac{R_{power|\lambda 1}}{R_{power|\lambda 2}} = 1 + R \frac{e^{-2\alpha_{Np}L}}{\frac{\gamma_{Rayleigh}}{2\alpha_{Np}} \cdot \left[1 - e^{-2\alpha_{Np}L}\right]}. \qquad (8)$$

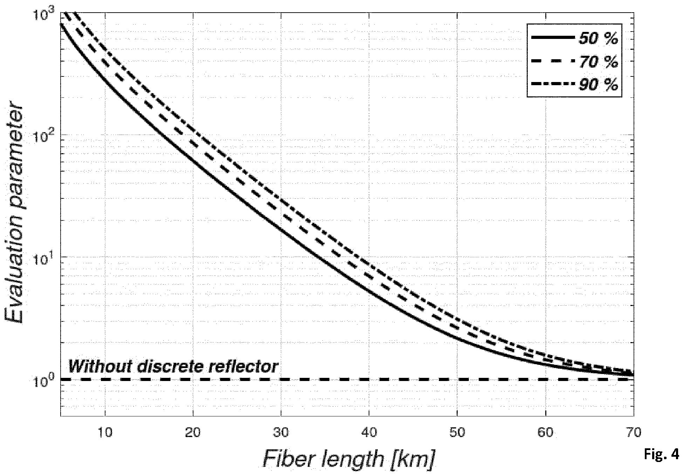

For a wavelength of about 1450 nm, the dependence of this evaluation parameter $R_{eval}$ on the length of the optical transmission fiber 106 is illustrated in Fig. 4 for different values of reflection factor R of 0.5; 0.7 and 0.9. The reflection factor R defines the power portion of the first optical signal reflected by the reflection device 144. Note that the power of the first optical signal is lower upon arrival at the reflection device 144 due to fiber attenuation, e.g. caused by scattering effects and splices in the optical transmission fiber 106, compared to the power of the optical signal being emitted by the first optical signal source 118. The fiber link is considered to be intact when the evaluation parameter $R_{eval}$ (y-axis) is significantly larger than 1 (e.g. 2 or more), which is the case for fiber lengths up to around 50 km. The smaller ratio at larger fiber lengths may lead to a reduced reliability. In contrast, detecting ASE for laser safety purposes works sufficiently only at greater fiber lengths. Therefore, when combining the two techniques in one setup, an intact transmission link is assumed if one of the techniques yields a positive result.

It is important to note that the power $P_{Rayleigh|\lambda\#}$ reflected back to the first optical signal port 110 by Rayleigh backscattering, described by equation (3), is only applicable for wavelengths which are close enough to each other that they experience essentially the same wavelength-dependent attenuation and scattering, i.e. the attenuation caused by the optical transmission fiber does not differ by more than a predetermined threshold value, wherein the predetermined threshold value is preferably less than 0.5 dB, more preferably less than 0.2 dB and most preferably less than 0.1 dB in case of the twofold length of the optical transmission fiber. In other words, the total attenuation which the two signals experience when traversing the optical transmission fiber 106 from the active network element 102 to the passive network element 104 and back again, should not differ by more than these values.

Another reason why the wavelengths of the monitoring signals should not be further apart than the previously described values is the Raman amplification. In case at least one of the optical signal sources 118 and 120 is a pump laser, the corresponding monitoring signal is a pump signal. A pump signal in this instant is configured to amplify the optical signal, which entered the active network element 102 through the second optical signal port 108. In other words, it amplifies the data signal traversing the optical transmission link.

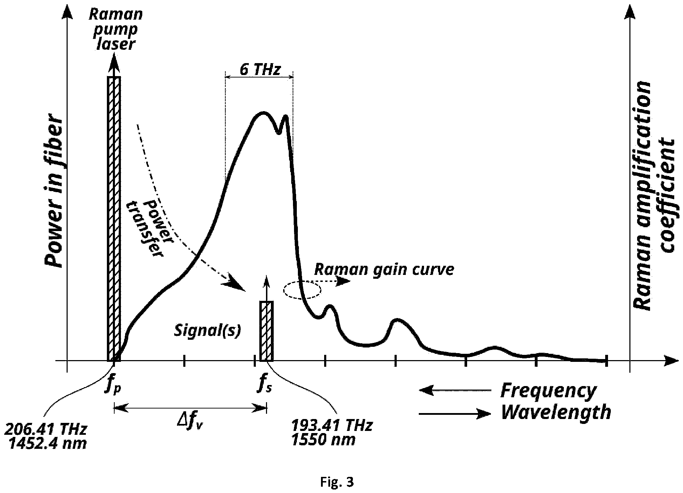

In Fig. 3, the wavelength dependence of Raman amplification is depicted in a diagram. The diagram shows the power of optical signals versus their wavelengths or frequencies. In this example, the width of the usable spectral for signal amplification provided by a single pump laser, is about 6 THz. The signal to be amplified has a frequency of 193.41 THz or a wavelength of 1550 nm. Raman amplification works in a way that the amplification does not happen directly at the wavelength of the Raman pump signal, but at a wavelength at a distance thereto. In the example shown in Fig. 3, the distance between the frequencies of the Raman pump signal and the peak of the Raman gain curve $\Delta f_v$ is 13 THz which equates to a distance of 97.59 nm of their respective wavelengths. In order to amplify a specific signal, the Raman pump signal emitted by a Raman pump laser therefore needs to be at a specific wavelength/frequency distance to that signal in order to get maximum Raman gain.

Therefore, the wavelength of the monitoring signal is chosen in such a way that the monitoring signal does not experience Raman amplification greater than a predetermined threshold value, wherein the threshold value is preferably 0.5 dB, more preferably 0.2 dB and most preferably 0.05 dB. That means the difference between the wavelengths of the monitoring signal and the pump signal is preferably smaller than 4 nm, more preferably smaller than 3 nm and most preferably smaller than 2 nm. This ensures that the monitoring signal is not amplified along with the optical signal to be transferred by the optical transmission link, which in turn ensures that the monitoring signal does not interfere with the signal to be amplified.

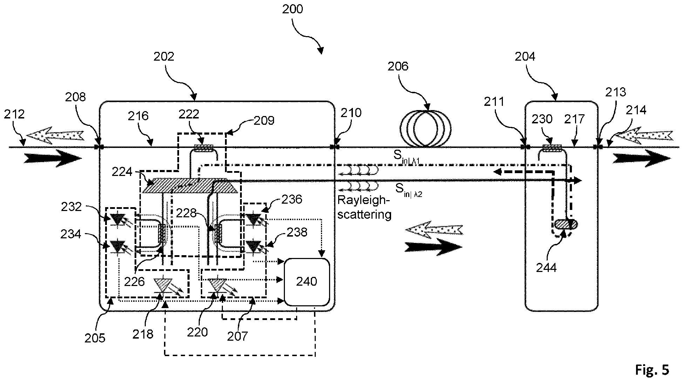

Fig. 5 shows another schematic structure of a system 200 for monitoring fiber integrity in an optical transmission link. The system comprises an active network element 202 and a passive network element 204. Between the active and passive network element, a first end of the optical transmission fiber 206 is coupled into the first optical signal port 210 at the active network element 202, and a second end of the optical transmission fiber 206 is coupled into the third optical signal port 211 at the passive network element 204. An optical transmission fiber 212 and 214 is coupled into the second optical signal port 208 and the fourth optical signal port 213 respectively, to continue the data transfer along the optical transmission link.

In the active network element 202, the second optical signal port 208 and the first optical signal port 210 are connected by an optical path 216. The optical path 216 is configured to ensure a transfer of optical signals from the second optical signal port 208 to the first optical signal port 210 and vice versa. The active network element 202 comprises an optical coupling device 209 (dotted lines), which comprises a first, second, third and fourth coupling device 222, 224, 226 and 228. The active network element 202 further comprises a first optical transceiver 205 (dotted lines), which comprises a first optical signal source 218, a first measurement device 232 and a second measurement device 234. The active network element 202 further comprises a second optical transceiver 207 (dotted lines), which comprises a second optical signal source 220, a third measurement device 236 and a fourth measurement device 238.

Measurement devices 232 and 236 are used for accurately determining the optical power launched into the transmission fiber 206 at port 210 at the respective wavelength. In case of relaxed accuracy requirements, the optical power at the respective wavelength can also be derived from the operating parameters of the laser diode such as injection current or from readings of the internal backfacet monitor diode. The same applies to the photodiodes 132 and 136 of Fig. 1 and Fig. 2. Furthermore, the coupling device 126 is no longer required in this case.

Along the optical path 216, the first coupling device 222 is connected to the optical path 216. The first coupling device 222 is configured to couple optical signals into the optical path 216 and to decouple optical signals out of the optical path 216.

The first coupling device 222 is connected to the second coupling device 224 via another optical path. In this embodiment, the second coupling device 224 is configured as a multiplexer, but it can be configured as any means capable of coupling and decoupling optical signals from one optical path into another. The multiplexer is configured to be able to multiplex and demultiplex optical signals. The second coupling device 224 is connected to the third coupling device 226 and the fourth coupling device 228 via an optical path. The third coupling device 226 is connected to the first measurement device 232, the second measurement device 234 and the first optical signal source 218 via optical paths. All measurement devices in the active network element 202 can be configured as photo diodes or any other means capable of measuring optical signals. In this embodiment, the first optical signal source 218 and the second optical signal source 220 are configured as pump lasers capable of emitting an optical pump signal for amplification of optical signals.

The fourth coupling device 228 is connected to the third measurement device 236, the fourth measurement device 238 and the second optical signal source 220 via optical paths. All measurement devices in the active network element 202, namely, the first, second, third and fourth measurement device 232, 234, 236 and 238, are connected to an evaluation unit 240. The evaluation unit 240 can be configured as any means capable of executing computing steps, receiving and sending signals and evaluating data, e.g. a computer. An embodiment analog to Fig. 2 with a transmission unit instead of the evaluation unit 240 in the active network element is possible (not shown). In such an embodiment, an external evaluation unit would be necessary analogously to the embodiment described in Fig. 2.

In the passive network element 204, the third optical signal port 211 and the fourth optical signal port 213 are connected by an optical path 217. The optical path 217 is configured to ensure a transfer of optical signals from the third optical signal port 211 to the fourth optical signal port 213. Along the optical path 217, a sixth coupling device 230 is connected to the optical path 217. The sixth coupling device 230 is configured to couple optical signals into the optical path 217 and to decouple optical signals out of the optical path 217. The sixth coupling device 230 is connected to a reflection device 244 via an optical path. The reflection device 244 can be configured as a mirror or a wavelength-dependent mirror or any other means capable of reflecting optical signals.

In the embodiment of the invention shown in Fig. 5, an optical signal is traversing along the optical transmission fiber 212. It enters the active network element 202 through the second optical signal port 208 and traverses to the first optical signal port 210 along the optical path 216.

The first optical signal source 218 emits a first optical signal $S_{in|\lambda 1}$ at wavelength $\lambda_1$ in form of a pump signal which traverses from the first optical signal source 218 to the third coupling device 226. A pump signal essentially has the same properties as an optical monitoring signal. The main difference between an applied monitoring signal and a pump signal is their power. The pump signal is used to amplify the optical transmission signal traversing the optical transmission link in addition to verifying the integrity of the optical transmission fiber 106, 206. The monitoring signal is only used to verify the integrity of the optical transmission fiber 106, 206 and does therefore not need power as high as the pump signal. At the third coupling device 226, a small power portion of the first optical signal $S_{in|\lambda 1}$ at wavelength $\lambda_1$ is decoupled and transmitted to the first measurement device 232 via an optical path. The first measurement device 232 measures the optical power $P_{in|\lambda 1}$ of the first optical signal $S_{in|\lambda 1}$ at wavelength $\lambda_1$. It then transmits the measurement data to the evaluation unit 240. The main portion of the first optical signal $S_{in|\lambda 1}$ at wavelength $\lambda_1$, which has not been decoupled by the third coupling device 226, traverses from the third coupling device 226 to the second coupling device 224.

The second optical signal source 220 emits a second optical signal $S_{in|\lambda 2}$ at wavelength $\lambda_2$, also in the form of a pump signal, which traverses from the second optical signal source 220 to the fourth coupling device 228. At the fourth coupling device 228, a small power portion of the second optical signal $S_{in|\lambda 2}$ at wavelength $\lambda_2$ is decoupled and transmitted to the third measurement device 236 via an optical path. The third measurement device 236 measures the optical power $P_{in|\lambda 2}$ of the second optical signal $S_{in|\lambda 2}$ at wavelength $\lambda_2$. It then transmits the measurement data to the evaluation unit 240. The main portion of the second optical signal $S_{in|\lambda 2}$ at wavelength $\lambda_2$, which has not been decoupled by the fourth coupling device 228, traverses from the fourth coupling device 228 to the second coupling device 224.

The first optical signal $S_{in|\lambda 1}$ at wavelength $\lambda_1$ and the second optical signal $S_{in|\lambda 2}$ at wavelength $\lambda_2$ are multiplexed by the second coupling device 224. The multiplexed signal is then transmitted to the first coupling device 222. The optical signal, which entered the active network element 202 through the second optical signal port 208, is multiplexed with the previously multiplexed signal by the first coupling device 222.

The multiplexed signal is then coupled into the optical transmission fiber 206 in the direction towards the passive network element 204 by the first optical signal port 210. The multiplexed signal traverses along the optical transmission fiber 206 to the passive network element 204 and is coupled into the optical path 217 by the third optical signal port 211. During the transmission from the active network element 202 to the passive network element 204, the multiplexed signal experiences Rayleigh scattering and other types of scattering which direct a portion of the multiplexed signal back to the active network element 202.

The sixth coupling device 230 decouples a power portion of the first optical signal $S_{in|\lambda 1}$ at a wavelength $\lambda_1$ from the optical path 217 to the reflection device 244. The reflection device 244 can be configured as a wavelength-dependent mirror or a mirror which reflects any wavelength. The reflection device 244 reflects the power portion of the first optical signal $S_{in|\lambda 1}$ at a wavelength $\lambda_1$ back to the sixth coupling device 230, which couples it into the optical path 217 in the direction back towards the active network element 202.

The first optical receive signal $S_{RX|1}$ at wavelength $\lambda_1$ and the second optical receive signal $S_{RX|2}$ at wavelength $\lambda_2$ traversing in a direction from the passive network element 204 towards the active network element 202 are coupled into the optical path 216 by the first optical signal port 210. The first optical receive signal $S_{RX|1}$ at wavelength $\lambda_1$ comprises, in addition to the power portions of the reflected first optical signal, power portions caused by backscattering, such as Rayleigh scattering, within the optical transmission fiber, whereas the second optical receive signal $S_{RX|2}$ at wavelength $\lambda_2$ comprises power portions caused by backscattering, such as Rayleigh scattering within the optical transmission fiber, only. The reflection device 244 only reflects the first optical signal at wavelength $\lambda_1$.

The first and second optical receive signal $S_{RX|1}$ and $S_{RX|2}$ at wavelengths $\lambda_1$ and $\lambda_2$ are decoupled by the first coupling device 222 from the optical path 216 and are subsequently separated by the second coupling device 224. The first optical receive signal $S_{RX|1}$ at wavelength $\lambda_1$ is transmitted to the third coupling device 226. The first optical receive signal $S_{RX|1}$ at wavelength $\lambda_1$ is then decoupled by the third coupling device 226 from the optical path and transmitted to the second measurement device 234 via an optical path. The second measurement device 234 measures the optical power $P_{RX|\lambda_1}$ of the first optical receive signal $S_{RX|1}$. It then transmits the measurement data to the evaluation unit 240.

The second optical receive signal $S_{RX|2}$ at wavelength $\lambda_2$ is transmitted to the fourth coupling device 228. The second optical receive signal $S_{RX|2}$ at wavelength $\lambda_2$ is then decoupled by the fourth coupling device 228 from the optical path and transmitted to the fourth measurement device 238 via an optical path. The fourth measurement device 238 measures the optical power $P_{RX|\lambda_2}$ of the second optical receive signal $S_{RX|2}$. It then transmits the measurement data to the evaluation unit 240.

The evaluation unit 240 determines an evaluation parameter $R_{eval}$ that is essentially determined by the transmission characteristics of the optical transmission fiber by using the measured values of the optical power $P_{RX|\lambda_1}$ and $P_{RX|\lambda_2}$ and the optical power $P_{in|\lambda_1}$ and $P_{in|\lambda_2}$ of the first and second optical signal. The evaluation parameter $R_{eval}$ is then compared with a predetermined evaluation threshold value in order to determine the integrity of the transmission fiber.

The result is then transmitted to the optical signal sources 218 and 220. By this, it is signaled that it is safe to launch pump powers into the fiber that are typically above laser safety limits.

The signal reflected back by the reflection device 244 may either be a monitor signal or a pump signal. However, when reflecting a pump signal problems may arise if the transmission fiber is very short such that a significant part of the pump light is reflected back towards the pump laser where it may disturb the operation of the laser if it is not protected by an isolator.

According to an embodiment of the invention, the optical power of the first and second optical signal $S_{in|\lambda_1}$ and $S_{in|\lambda_2}$ is periodically amplitude-modulated, preferably by a sinusoidal signal having a predetermined modulation frequency, wherein the modulation frequency is chosen in such a way that the evaluation parameter $R_{eval}$ is at a maximum in case of existing fiber integrity.

Sensitivity of the method can be increased by modulating the power of the first and second optical signal $S_{in|\lambda_1}$ and $S_{in|\lambda_2}$ launched into the transmission fiber 106, 206 by a sinusoidal signal. Denoting the modulation index by $m_{mod}$ and the angular frequency of the modulation signal by $\omega$, the optical power of the optical signal $P_{\lambda\#}(t)$ is described by

$$P_{\lambda\#}(t) = P_0 \cdot \{1 + m_{mod} \cos(\omega t)\} \qquad (9)$$

as a function of time $t$. The variable $P_0$ stands for the average launch power. With the above-introduced Rayleigh backscattering coefficient $\gamma_{Rayleigh}$ and attenuation coefficient $\alpha_{Np}$, the power $P_{Rayleigh|\lambda\#}(t)$ of the optical signal reflected by Rayleigh scattering and measured at the first optical signal port 110, 210 is given by

$$P_{Rayleigh|\lambda\#}(t) = \int_0^L \gamma_{Rayleigh} \cdot P\big(t - 2\beta_{gr}z\big) \exp\big(-2\alpha_{Np}z\big)\, dz, \qquad (10)$$

with z representing the propagation distance till reflection due to Rayleigh backscattering, $\beta_{gr}$ being the group propagation constant representing the inverse of the group velocity $v_{gr}$, and $L$ standing for the length of the transmission fiber 106, 206. It is assumed that power components reflected at different locations within the fiber superimpose incoherently. Normalized by the average launch power, the above equation can be rewritten by using two integrals:

$$\frac{P_{Rayleigh|\lambda\#}(t)}{P_0} = \frac{\gamma_{Rayleigh}}{P_0} \int_0^L P\big(t - 2\beta_{gr}z\big) \exp\big(-2\alpha_{Np}z\big)\, dz \qquad (11)$$

$$= \gamma_{Rayleigh}\Big[\int_0^L \exp\big(-2\alpha_{Np}z\big)\, dz \qquad (I_1)$$

$$+ m_{mod}\int_0^L \cos\big[\omega\big(t - 2\beta_{gr}z\big)\big] \exp\big(-2\alpha_{Np}z\big)\, dz\Big] \qquad (I_2)$$

The first integral $(I_1)$ can be solved very easily and results in

$$I_1 = \frac{1}{2\alpha_{Np}} \cdot \left[1 - \exp(-2\alpha_{Np}L)\right] \qquad (12)$$

whereas the result

$$I_2 = \frac{1}{2\alpha_{Np}} \cdot \frac{1}{1 + \left(\frac{\omega\beta_{gr}}{\alpha_{Np}}\right)^2} \cdot \left[\cos(\omega t) + \frac{\omega\beta_{gr}}{\alpha_{Np}}\sin(\omega t)\right.$$

$$\left. - \exp(-2\alpha_{Np}L)\left\{\cos(\omega t - 2\omega\beta_{gr}L) + \frac{\omega\beta_{gr}}{\alpha_{Np}}\sin(\omega t - 2\omega\beta_{gr}L)\right\}\right] \qquad (13)$$

of the second integral ($I_2$) is significantly more complex. Of course, the two integrals are identical for $\omega = 0$. Limiting our analysis in the following to frequencies with $\omega\beta_{gr}L = \pi \cdot N$, wherein N is an Integer, this equation can be rewritten as

$$I_2\big|_{\omega\beta_{gr}L=\pi\cdot N} = \frac{1-\exp(-2\alpha_{Np}L)}{2\alpha_{Np}} \cdot \frac{1}{1+\left(\frac{\omega\beta_{gr}}{\alpha_{Np}}\right)^2} \cdot \left[\cos(\omega t) + \frac{\omega\beta_{gr}}{\alpha_{Np}}\sin(\omega t)\right] \qquad (14)$$

with the amplitude

$$\gamma_{Rayleigh} \cdot m_{mod} \cdot \frac{1-\exp(-2\alpha_{Np}L)}{2\alpha_{Np}} \cdot \frac{1}{\sqrt{1+\left(\frac{\omega\beta_{gr}}{\alpha_{Np}}\right)^2}} \qquad (15)$$

of the sinusoidal variation including the modulation index $m_{mod}$. For a standard single mode fiber (SSMF) of 70 km length, this condition is met for modulation frequencies being entire multiples of around 3215 Hz. Components reflected at the reflection device 144, 244 with reflection factor $R$ can be described at the frequencies introduced above by

$$\frac{P_{reflector|\lambda 1}}{P_0} = R \cdot e^{-2\alpha_{Np}L} \cdot \{1 + m_{mod}\cos(\omega t)\} \qquad (16)$$

with the amplitude

$$m_{mod} \cdot R \cdot e^{-2\alpha_{Np}L} \qquad (17)$$

of the sinusoidal variation. Thus, comparing the amplitudes of the sinusoidal variation at the modulation frequency results in the ratio

$$R_{eval}\big|_{amplitude} = \frac{R_{power|\lambda 1}}{R_{power|\lambda 2}} = 1 + R \cdot \frac{e^{-2\alpha_{Np}L}}{\frac{\gamma_{Rayleigh}}{2\alpha_{Np}} \cdot \left[1 - e^{-2\alpha_{Np}L}\right]} \cdot \sqrt{1 + \left(\frac{\omega\beta_{gr}}{\alpha_{Np}}\right)^2}, \qquad (18)$$

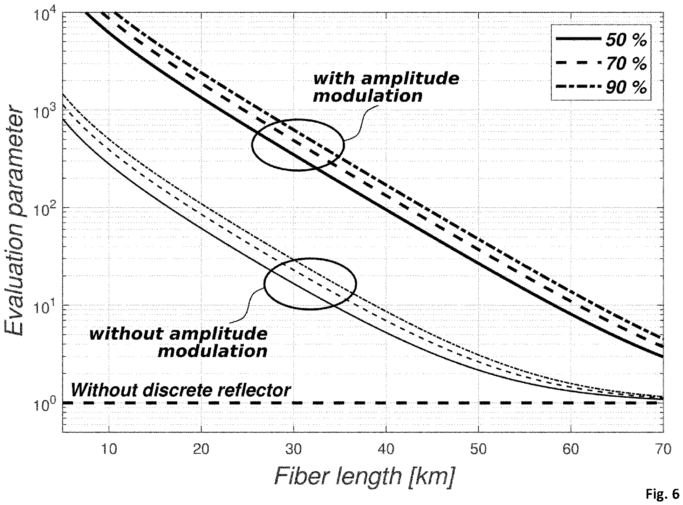

wherein the relevant second term is enhanced by the factor $\sqrt{1 + \left(\frac{\omega\beta_{gr}}{\alpha_{Np}}\right)^2}$ as compared to eq. (8) and thus providing a better contrast. For a modulation frequency of 100 MHz, the evaluation parameter $R_{eval}$ is presented in Fig. 6. For comparison purposes, the results without modulation are presented by lines with reduced linewidth.

For a wavelength of about 1450 nm, the dependence of the evaluation parameter $R_{eval}$ on the length of the optical transmission fiber 106 is illustrated in Fig. 6 for different values of reflection factor $R$ of 0.5; 0.7 and 0.9 with amplitude modulation and without amplitude modulation. The reflection factor $R$ defines the power portion of the first optical signal reflected by the reflection device 144. Note that the power of the first optical signal is lower upon arrival at the reflection device 144 due to fiber attenuation, e.g. caused by scattering effects and splices in the optical transmission fiber 106, compared to the power of the optical signal being emitted by the first optical signal source 118. The fiber link is considered to be intact when the evaluation parameter $R_{eval}$ (y-axis) is significantly larger than 1, which is the case for fiber lengths up to around 50 km without amplitude modulation and up to around 70 km with amplitude modulation. Amplitude modulation of the signals increases the monitoring length this method is capable of covering.

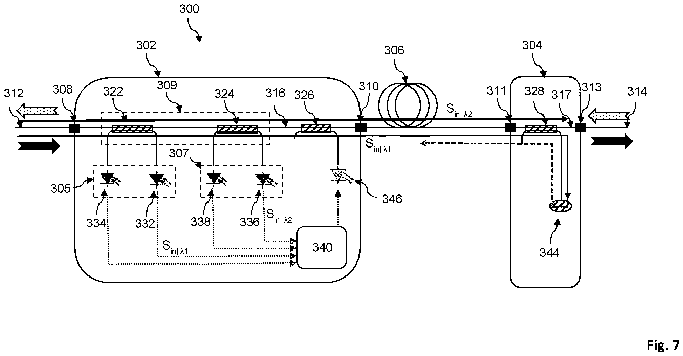

Fig. 7 shows another schematic structure of a system 300 for monitoring fiber integrity in an optical transmission link. The system comprises an active network element 302 and a passive network element 304. Between the active and passive network element, a first end of an optical transmission fiber 306 is coupled into the first optical signal port 310 at the active network element 302, and a second end of the optical transmission fiber 306 is coupled into the third optical signal port 311 at the passive network element 304. An optical transmission fiber 312 and 314 is coupled into the second optical signal port 308 and the fourth optical signal port 313, respectively, to continue the data transfer along the optical transmission link.

In the active network element 302, the second optical signal port 308 and the first optical signal port 310 are connected by an optical path 316. The optical path 316 is configured to ensure a transfer of optical signals from the second optical signal port 308 to the first optical signal port 310 and vice versa. The active network element 302 comprises an optical coupling device 309 (dotted lines), which comprises a first and second coupling device 322 and 324. The active network element 302 further comprises a first optical transceiver 305 (dotted lines), which comprises a first measurement device 332 and a second measurement device 334. The active network element 302 further comprises a second optical transceiver 307 (dotted lines), which comprises a third measurement device 336 and a fourth measurement device 338.

Here, as already mentioned above, the optical transceivers 305, 307 are realized as optical receivers, only, as no transmitting functionality is required (see the below description).

Along the optical path 316, the first coupling device 322 and the second coupling device 324 are connected to the optical path 316. The first coupling device 322 and the second coupling device 324 are configured to decouple optical signals out of the optical path 316. The first coupling device 322 is connected to the first measurement device 332 and the second measurement device 334 via optical paths. All measurement devices in the active network element 302 can be configured as photo diodes or any other means capable of measuring optical signals.

The second coupling device 324 is connected to the third measurement device 336 and the fourth measurement device 338 via optical paths. All measurement devices in the active network element 302, namely, the first, second, third and fourth measurement device 332, 334, 336 and 338, are connected to an evaluation unit 340. The evaluation unit 340 can be configured as any means capable of executing computing steps, receiving and sending signals and evaluating data, e.g. a computer or any other electronic device comprising appropriate hardware and software.

In the passive network element 304, the third optical signal port 311 and the fourth optical signal port 313 are connected by an optical path 317. The optical path 317 is configured to ensure a transfer of optical signals from the third optical signal port 311 to the fourth optical signal port 313 and vice versa. Along the optical path 317, a fourth coupling device 328 is connected to the optical path 317. The fourth coupling device 328 is configured to couple optical signals into the optical path 317 and to decouple optical signals out of the optical path 317. The fourth coupling device 328 is connected to a reflection device 344 via an optical path. The reflection device 344 can be configured as a mirror or a wavelength-dependent mirror or any other means capable of reflecting optical signals.

In the embodiment of the invention shown in Fig. 7, an optical transmission signal is traversing along the optical transmission fiber 312. It enters the active network element 302 through the second optical signal port 308 and traverses to the first optical signal port 310 along the optical path 316. Typically, the signal is a WDM-signal, which is a multiplexed optical signal with a wavelength range in the C-band and the L-band, but is not limited to these bands. The method is applicable to any other optical signal as well.

At the first coupling device 322, a small power portion of the transmission signal at wavelength $\lambda_1$ is decoupled and transmitted to the first measurement device 332 via an optical path. The wavelength $\lambda_1$ can be correspondent to an optical channel within a WDM signal or just any part of the transmission signal within a first wavelength range $\Delta\lambda_1$. The rest of the optical signal at wavelength $\lambda_1$, which is not decoupled by the first coupling device 322, is used as the optical signal $S_{in|\lambda 1}$ at wavelength $\lambda_1$. The first measurement device 332 measures the optical power $P_{in|\lambda 1}$ of the first decoupled optical signal at wavelength $\lambda_1$. It then transmits the measurement data to the evaluation unit 340. The main portion of the first optical signal $S_{in|\lambda 1}$ at wavelength $\lambda_1$, which has not been decoupled by the first coupling device 322, traverses the optical path 316 towards the first optical signal port 310.

At the second coupling device 324, a small power portion of the transmission signal at wavelength $\lambda_2$ is decoupled and transmitted to the third measurement device 336 via an optical path. The wavelength $\lambda_2$ can be correspondent to an optical channel within a WDM signal or just any part of the transmission signal within a second wavelength range $\Delta\lambda_2$. $\lambda_2$ must not be equal to $\lambda_1$. The rest of the optical signal at wavelength $\lambda_2$, which is not decoupled by the second coupling device 324, is used as the optical signal $S_{in|\lambda 2}$ at wavelength $\lambda_2$. The third measurement device 336 measures the optical power $P_{in|\lambda 2}$ of the second decoupled optical signal at wavelength $\lambda_2$. It then transmits the measurement data to the evaluation unit 340. The main portion of the second optical signal $S_{in|\lambda2}$ at wavelength $\lambda_2$, which has not been decoupled by the first coupling device 322, traverses the optical path 316 towards the first optical signal port 310.

The transmission signal, which comprises the first and second optical signals at wavelengths $\lambda_1$ and $\lambda_2$ is then coupled into the optical transmission fiber 306 in the direction towards the passive network element 304 by the first optical signal port 310. The transmission signal traverses along the optical transmission fiber 306 to the passive network element 304 and is coupled into the optical path 317 by the third optical signal port 311. During the transmission from the active network element 302 to the passive network element 304, the transmission signal experiences Rayleigh scattering and other types of scattering which direct a portion of the transmission signal back to the active network element 302.

The fourth coupling device 328 decouples a power portion of the first optical signal $S_{in|\lambda1}$ at a wavelength $\lambda_1$ from the optical path 317 to the reflection device 344. The reflection device 344 can be configured as a wavelength-dependent mirror or a mirror which reflects any wavelength. The reflection device 344 reflects the power portion of the first optical signal $S_{in|\lambda1}$ at a wavelength $\lambda_1$ back to the fourth coupling device 328, which couples it into the optical path 317 in the direction back towards the active network element 302.

The first optical receive signal $S_{RX|1}$ at wavelength $\lambda_1$ and the second optical receive signal $S_{RX|2}$ at wavelength $\lambda_2$ traversing in a direction from the passive network element 304 towards the active network element 302 are coupled into the optical path 316 by the first optical signal port 310. The first optical receive signal $S_{RX|1}$ at wavelength $\lambda_1$ comprises, in addition to the power portions of the reflected first optical signal, power portions caused by backscattering, such as Rayleigh scattering, within the optical transmission fiber, whereas the second optical receive signal $S_{RX|2}$ at wavelength $\lambda_2$ comprises power portions caused by backscattering, such as Rayleigh scattering, within the optical transmission fiber, only. The reflection device 344 only reflects the first optical signal at wavelength $\lambda_1$.

The second optical receive signal $S_{RX|2}$ at wavelength $\lambda_2$ is decoupled by the second coupling device 324 from the optical path 316 and transmitted to the fourth measurement device 338 via an optical path. The fourth measurement device 338 measures the optical power $P_{RX|\lambda2}$ of the second optical receive signal $S_{RX|2}$. It then transmits the measurement data to the evaluation unit 340.

The first optical receive signal $S_{RX|1}$ at wavelength $\lambda_1$ is decoupled by the first coupling device 322 from the optical path 316 and transmitted to the second measurement device 334 via an optical path. The second measurement device 334 measures the optical power $P_{RX|1}$ of the first optical receive signal $S_{RX|1}$. It then transmits the measurement data to the evaluation unit 340.

The evaluation unit 340 determines an evaluation parameter $R_{eval}$ that is essentially determined by the transmission characteristics of the optical transmission fiber by using the measured values of the optical power $P_{RX|\lambda1}$ and $P_{RX|\lambda2}$ and the optical power $P_{in|\lambda1}$ and $P_{in|\lambda2}$ of the first and second optical signal. The evaluation parameter $R_{eval}$ is then compared with a predetermined evaluation threshold value in order to determine the integrity of the transmission fiber.

The result is then transmitted to the optical pump laser 346. By this, it is signaled that it is safe to launch pump powers into the transmission fiber 306 that are typically above laser safety limits.

In the embodiments described so far, dedicated first measurement devices 132, 232, 332 and third measurement devices 136, 236, 336 are used for determining the power of the first optical signal at wavelength $\lambda_1$ and the second optical signal at wavelength $\lambda_2$, respectively, at the first optical signal port 110, 210, 310. For optimum accuracy, external photo diodes are used. However, with slightly reduced accuracy the same information can be derived from photo diodes typically integrated into the laser diode modules, often called back facet or front facet monitors. In this way, the setup becomes less complex.

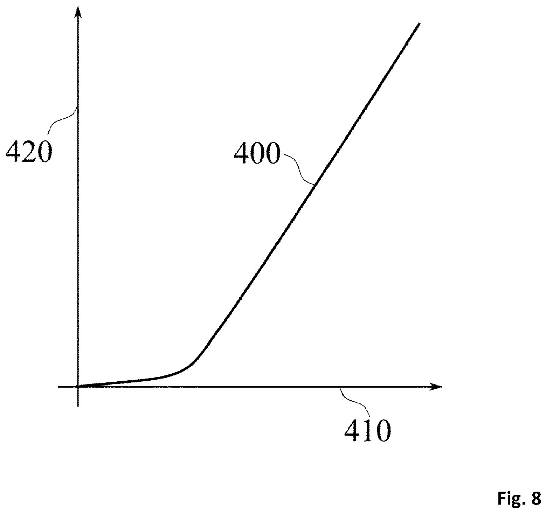

The dependency of the output power 420 of a laser diode on the injection current 410 is typically characterized by the so-called LI curve 400 with a clear threshold behavior, as illustrated in Fig. 8. This means, at low values of the injection current 410 the optical output power 420 rises very slowly. If the value of the injection current 410 exceeds a threshold value, the LI curve 400 becomes significantly steeper (almost linear). If operated below the current threshold, the laser diode emits essentially incoherent light (like a light-emitting diode (LED)), whereas lasing (creation of coherent light) is achieved above the threshold. Laser diode manufacturers supply their products almost always with data describing this relation. Thus, the power of the first optical signal at wavelength $\lambda_1$ and the second optical signal at wavelength $\lambda_2$ may also be derived from the respective injection currents. Since these LI curves undergo variations over time due to aging, this technique might suffer from reduced accuracy. Nevertheless, this approach is useful for short-distance applications.

**List of Reference Signs**

| | |
|---|---|
| 100, 200, 300 | optical transmission link |
| 102, 202, 302 | active network element |
| 104, 204, 304 | passive network element |
| 105, 205, 305 | first optical transceiver |

| 107, 207, 307 | second optical transceiver |
| 109, 209, 309 | optical coupling device |
| 106, 206, 306 | optical transmission fiber |
| 112, 212, 312 | optical transmission fiber |
| 114, 214, 314 | optical transmission fiber |
| 110, 210, 310 | first optical signal port |
| 108, 208, 308 | second optical signal port |
| 111, 211, 311 | third optical signal port |
| 113, 213, 313 | fourth optical signal port |
| 116, 216, 316 | optical path |
| 117, 217, 317 | optical path |
| 118, 218 | first optical signal source |
| 120, 220 | second optical signal source |
| 122, 222, 322 | first coupling device |
| 124, 224, 324 | second coupling device |
| 126, 226, 326 | third coupling device |
| 128, 228, 328 | fourth coupling device |
| 129 | fifth coupling device |
| 130, 230, | sixth coupling device |
| 132, 232, 332 | first measurement device |
| 134, 234, 334 | second measurement device |
| 136, 236, 336 | third measurement device |
| 138, 238, 338 | fourth measurement device |
| 140, 240, 340 | evaluation unit |
| 142 | transmission unit |
| 144, 244, 344 | reflection device |
| 346 | pump laser |
| 400 | LI curve |
| 410 | injection current |
| 420 | laser diode output power |

| $S_{in|\lambda 1}$ | first optical signal at wavelength $\lambda_1$ |
| $S_{in|\lambda 2}$ | second optical signal at wavelength $\lambda_2$ |
| $S_{RX|1}$ | first optical receive signal |
| $S_{RX|2}$ | second optical receive signal |
| $R_{eval}$ | evaluation parameter |
| $P_{in|\lambda 1}$ | optical power of the first optical signal |
| $P_{in|\lambda 2}$ | optical power of the second optical signal |
| $P_{RX|\lambda 1}$ | optical power of the first optical receive signal |
| $P_{RX|\lambda 2}$ | optical power of the second optical receive signal |
| $P_{\lambda 1}(t)$ | optical power of the first optical signal as a function of time |

**Claims**

1. A method for monitoring fiber integrity in an optical transmission link (100, 200, 300),

   (a) the optical transmission link (100, 200, 300) comprising an active network element (102, 202, 302) and a passive network element (104, 204, 304) which are connected via an optical transmission fiber (106, 206, 306),

   **characterized in that** the method comprises the steps of:

   (b) outputting, at the active network element (102, 202, 302), a first optical signal at a wavelength $\lambda_1$ or within a first wavelength range $\Delta\lambda_1$ and a second optical signal at a wavelength $\lambda_2$ or within a first wavelength range $\Delta\lambda_2$ into the transmission fiber (106, 206, 306) in a direction towards the passive network element (104, 204, 304), wherein each of the first and second optical signals is either generated within the active network element (102, 202, 302) or supplied to the active network element (102, 202, 302);
   (c) measuring or determining, at the active network element (102, 202, 302), relative or absolute values of the optical power $P_{in|\lambda 1}$ and $P_{in|\lambda 2}$ of the first and second optical signal;

(d) reflecting, at the passive network element (104, 204, 304), a predetermined power portion of the first optical signal to form a reflected first optical signal, the reflected first optical signal being guided back, through the optical transmission fiber (106, 206, 306), to the active network element (102, 202, 302);

(e) measuring, at the active network element (102, 202, 302), relative or absolute values $P_{RX|\lambda 1}$ and $P_{RX|\lambda 2}$ of the optical power of a first optical receive signal $S_{RX|1}$ and a second optical receive signal $S_{RX|2}$ that are received at the active network element (102, 202, 302), wherein the optical power $P_{RX|\lambda 1}$ comprises, in addition to power portions of the reflected first optical signal received, power portions caused by backscattering within the optical transmission fiber (106, 206, 306), and wherein the optical power $P_{RX|\lambda 2}$ comprises power portions caused by backscattering or reflections before or within the optical transmission fiber (106, 206, 306), but not in the passive network element; and

(f) determining an evaluation parameter $R_{eval}$ that is essentially determined by the transmission characteristics of the optical transmission fiber (106, 206, 306) by using measured values of the optical power $P_{RX|\lambda 1}$ and $P_{RX|\lambda 2}$ of the first and second optical receive signal and the optical power $P_{in|\lambda 1}$ and $P_{in|\lambda 2}$ of the first and second optical signal; and

(g) comparing the evaluation parameter $R_{eval}$ with a predetermined evaluation threshold value in order to determine the integrity of the transmission fiber (106, 206, 306).

2. The method according to claim 1, wherein the evaluation parameter $R_{eval}$ is determined by forming a ratio of a generalized reflectivity $R_{power|\lambda 1}$ and $R_{power|\lambda 2}$ at the first and second wavelength $\lambda_1$, $\lambda_2$, respectively, wherein the generalized reflectivity at the respective wavelength $\lambda_1$, $\lambda_2$ is defined as the ratio of the respective optical power $P_{RX|\lambda 1}$, $P_{RX|\lambda 2}$ of the first and second optical receive signal $S_{RX|1}$, $S_{RX|2}$ and the respective optical power $P_{in|\lambda 1}$, $P_{in|\lambda 2}$ of the first and second optical signal.

3. The method according to claim 1 or 2, wherein the evaluation parameter $R_{eval}$ is determined by the calculation rule

$$R_{\text{eval}} = \frac{R_{power|\lambda 1}}{R_{power|\lambda 2}},$$

wherein the generalized reflectivities $R_{power|\lambda 1}$ and $R_{power|\lambda 2}$ are determined by the calculation rules

$$R_{power|\lambda 1} = \frac{P_{RX|\lambda 1}}{P_{in|\lambda 1}} \qquad \text{and} \qquad R_{power|\lambda 2} = \frac{P_{RX|\lambda 2}}{P_{in|\lambda 2}}.$$

4. The method according to claim 2 or 3, wherein the integrity of the transmission fiber (106, 206, 306) is confirmed if the evaluation parameter $R_{eval}$ is larger than 1 by a predetermined amount, preferably larger than 1.5, more preferably larger than 2, most preferably larger than 5.

5. The method according to any of the preceding claims, wherein the first and second optical signals are either monitoring signals, pump signals, which are adapted to effect Raman amplification within the optical transmission fiber, data signals, which can be part of a transmission signal traversing the optical transmission link (100, 200, 300), or any combination thereof.

6. The method according to any of the preceding claims, wherein the wavelengths $\lambda_1$, $\lambda_2$ of the first and second optical signal are chosen such that they encounter a wavelength-dependent attenuation, caused by the optical transmission fiber (106, 206, 306), that does not differ by more than a predetermined threshold value, wherein the predetermined threshold value is preferably less than 0.5 dB, more preferably less than 0.2 dB and most preferably less than 0.1 dB in case of the twofold length of the optical transmission fiber (106, 206, 306).

7. The method according to any of the preceding claims, wherein the first optical signal is a monitoring signal and the second optical signal is a pump signal adapted to effect Raman amplification within the optical transmission fiber and wherein the wavelength $\lambda_1$, of the monitoring signal is chosen in such a way that the monitoring signal does not experience Raman amplification greater than a predetermined threshold value, wherein the threshold value is preferably 0.5 dB, more preferably 0.2 dB and most preferably 0.05 dB.

8. The method according to any of the preceding claims, wherein the optical power of the first and second optical signal is periodically amplitude-modulated, preferably by a sinusoidal signal having a predetermined modulation frequency, and wherein the modulation frequency is chosen in such a way that the evaluation parameter $R_{eval}$ is at a maximum in case of existing fiber integrity.

9. An active network element (102, 202, 302) for monitoring fiber integrity in an optical transmission link (100, 200, 300) according to one of claims 1 to 8, the active network element (102, 202, 302) comprising:

(a) a first optical signal port (110, 210, 310) being connectable to a first end of the optical transmission fiber (106, 206, 306), the first optical signal port (110, 210, 310) being connected to a first end of an internal optical path;
(b) a first optical transceiver (105, 205, 305) which is configured, in case the first optical signal at wavelength $\lambda_1$ is not supplied to the active network element (102, 202, 302), to create and couple the first optical signal at wavelength $\lambda_1$ into the optical path (116, 216) by means of an optical coupling device (109, 209) and to receive, via the optical coupling device (109, 209), the first optical receive signal $S_{RX|1}$ that is received at the first optical signal port (110, 210) if the first optical signal port (110, 210) is connected, via the optical transmission fiber (106, 206), to the passive network element (104, 204), or, in case the first optical signal at wavelength $\lambda_1$ is supplied to the active network element (302), to receive via an optical coupling device (309), the first optical signal at wavelength $\lambda_1$;
(c) wherein the first optical transceiver (105, 205, 305) is further configured to measure or determine relative or absolute values of the optical power $P_{in|\lambda 1}$ of the first optical signal and relative or absolute values $P_{RX|\lambda 1}$ of the optical power of a first optical receive signal $S_{RX|1}$;
(d) a second optical transceiver (107, 207, 307) which is configured, in case the second optical signal at wavelength $\lambda_2$ is not supplied to the active network element (102, 202, 302), to create and couple the second optical signal at the wavelength $\lambda_2$ into the optical path (116, 216, 316) by means of the optical coupling device (109, 209, 309) and to receive, via the optical coupling device (109, 209, 309), the second optical receive signal $S_{RX|2}$ that is received at the first optical signal port (110, 210, 310) if the first optical signal port (110, 210, 310) is connected, via the optical transmission fiber (106, 206, 306), to the passive network element (104, 204, 304), or, in case the second optical signal at wavelength $\lambda_2$ is supplied to the active network element (102, 202, 302), to receive via the optical coupling device (109, 209, 309), the second optical signal at wavelength $\lambda_2$;
(e) wherein the second optical transceiver (107, 207, 307) is further configured to measure relative or absolute values of the optical power $P_{in|\lambda 2}$ of the second optical signal and relative or absolute values $P_{RX|\lambda 2}$ of the optical power of a second optical receive signal $S_{RX|2}$.

10. The active network element (102, 202, 302) according to claim 9 comprising an evaluation unit (140, 240, 340) which is configured to determine the evaluation parameter $R_{eval}$ using the values measured by the first and second optical transceiver (105, 205, 305, 107, 207, 307).

11. The active network element (102, 202, 302) according to claim 9 or 10 comprising a transmission unit (142) configured to transmit information on the values measured by the first and second optical transceiver (105, 205, 305, 107, 207, 307) to an evaluation unit (140, 240, 340) which is configured to determine the evaluation parameter $R_{eval}$.

12. The active network element (102, 202, 302) according to any of claims 9 to 11, wherein the active network element (102, 202, 302) further comprises a second optical signal port (108, 208, 308) which is connectable to a further optical transmission fiber (112, 212, 312) and wherein the optical coupling device (109, 209, 309) is configured to pass through an optical transmission signal received at the second optical signal port (108, 208, 308) to the first optical signal port (110, 210, 310) and vice versa.

13. The active network element (102, 202, 302) according to claim 12, wherein at least one of the first and second optical transceivers (105, 205, 305, 107, 207, 307) is configured to create the respective first or second optical signal as a pump signal in order to create Raman amplification within the optical transmission fiber (106, 206, 306).

14. A system for monitoring fiber integrity in an optical transmission link (100, 200, 300), configured to implement the method according to any of claims 1 to 8, comprising:

(a) an active network element (102, 202, 302) according to any of claims 9 to 13; and
(b) a passive network element (104, 204, 304) comprising a third optical signal port (111, 211, 311) which is connectable to a second end of the optical transmission fiber (106, 206, 306) and a reflection device (144, 244, 344) configured to reflect at least a predetermined power portion of the first optical signal and to feed the reflected power portion to the third optical signal port (111, 211, 311) in direction to the active network element (102, 202, 302); and
(c) an evaluation unit (140, 240, 340), configured to determine the evaluation parameter $R_{eval}$ using the measured

values and to use the evaluation parameter $R_{eval}$ to determine the integrity of the optical transmission fiber (106, 206, 306).

15. The system according to claim 14, **characterized in that** the passive network element (104, 204, 304) comprises a fourth optical signal port (113, 213, 313) which is connectable to a further optical transmission fiber (114, 214, 314), that the passive network element (104, 204, 304) is configured to pass through, via an optical path (117, 217, 317), an optical transmission signal received at the third optical signal port (111, 211, 311) to the fourth optical signal port (113, 213, 313) and vice versa, wherein the passive network element (104, 204, 304) is configured to, in case neither the first optical signal at wavelength $\lambda_1$ nor the second optical signal at wavelength $\lambda_2$ is supplied to the active network element (102, 202, 302), dissipate all optical power of the first and second optical signals apart from the reflected optical power portion of the first optical signal.

**Fig. 1**

Fig. 2

Fig. 3

Fig. 4

$S_{in|\lambda1}$

$S_{in|\lambda2}$

Rayleigh-scattering

Fig. 5

Fig. 6

Fig. 7

**Fig. 8**

**EUROPEAN SEARCH REPORT**

Europäisches
Patentamt
European
Patent Office
Office européen
des brevets

Application Number

EP 24 17 1456

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 185 020 B1 (HORIUCHI YUKIO [JP] ET AL) 6 February 2001 (2001-02-06) | 1,5,6, 9-12,14, 15 | INV. H04B10/071 |
| A | * column 4, line 1 - column 6, line 34 * <br> * figures 1, 2 * <br> - - - - - | 2-4,7,8, 13 | |
| A | US 6 630 992 B1 (VOBIAN JOACHIM [DE] ET AL) 7 October 2003 (2003-10-07) <br> * column 5, line 4 - column 8, line 14 * <br> * figures 1-3 * <br> - - - - - | 1-15 | |

TECHNICAL FIELDS
SEARCHED (IPC)

H04B

The present search report has been drawn up for all claims

| Place of search | Date of completion of the search | Examiner |
|---|---|---|
| Munich | 26 September 2024 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 1456

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2024

| Patent document cited in search report | | Publication date | Patent family member(s) | | Publication date |
|---|---|---|---|---|---|
| US 6185020 | B1 | 06-02-2001 | EP | 0823621 A2 | 11-02-1998 |
| | | | JP | 3402083 B2 | 28-04-2003 |
| | | | JP | H1051401 A | 20-02-1998 |
| | | | US | 6185020 B1 | 06-02-2001 |
| US 6630992 | B1 | 07-10-2003 | AT | E250301 T1 | 15-10-2003 |
| | | | DE | 19830729 A1 | 20-01-2000 |
| | | | EP | 1095472 A1 | 02-05-2001 |
| | | | JP | 2002520602 A | 09-07-2002 |
| | | | US | 6630992 B1 | 07-10-2003 |
| | | | WO | 0003504 A1 | 20-01-2000 |

EPO FORM P0459

For more details about this annex : see Official Journal of the European Patent Office, No. 12/82

## REFERENCES CITED IN THE DESCRIPTION

**Patent documents cited in the description**

- EP 1229382 B1
- EP 2161859 B1